(19) Europäisches Patentamt
European Patent Office
Office européen des brevets

(11) Publication number: 0 264 760
A2

(12) # EUROPEAN PATENT APPLICATION

(21) Application number: 87114866.4

(51) Int. Cl.4: C08G 59/00

(22) Date of filing: 12.10.87

(30) Priority: 14.10.86 US 918739

(43) Date of publication of application:
27.04.88 Bulletin 88/17

(84) Designated Contracting States:
AT BE CH DE ES FR GB IT LI NL SE

(71) Applicant: THE DOW CHEMICAL COMPANY
2030 Dow Center Abbott Road P.O. Box 1967
Midland, MI 48640(US)

(72) Inventor: Pham, Ha Quoc
410 North Yaupon
Richwood Texas 77531(US)
Inventor: Gammill, Benny B.
3501 Country Road No. 36
Angleton Texas 77515(US)

(74) Representative: Sternagel, Hans-Günther, Dr. et al
Patentanwälte Dr. Michael Hann Dr. H.-G. Sternagel Sander Aue 30
D-5060 Bergisch Gladbach 2(DE)

(54) **Preparation of epoxy resins.**

(57) An improved process for the preparation of epoxy resins comprising reacting at least one epihalohydrin with at least one aromatic material containing an active hydrogen atom reactive with an epihalohydrin in the presence of an organic solvent, an alkali metal hydroxide and optionally in the presence of a catlyast for the reaction between the aromatic active hydrogen-containing material and the epihalohydrin while controlling the concentration of water in the reaction mixture. The improvement comprises (1) drying the reaction mixture after completion of the reaction with the concentration of water is equal to or less than 2 percent by weight; (2) removing any insoluble materials from the reaction mixture by any suitable mechanical solid separation means thereby forming a resin/epihalohydrin/organic solvent mixture essentially free of insoluble material; (3) washing the resin/epihalohydrin/organic solvent material with water, so as to remove water soluble materials; (4) drying the resin/epihalohydrin/organic solvent mixture to a water content equal to or less than 2 percent by weight; and (5) recovering the resultant epoxy resin from the resin/epihalohydrin/organic solvent mixture by an suitable means. The present process maximizes epihlaohydrin yields and also produces epoxy resins low in hydrolyzable halide and total halide.

EP 0 264 760 A2

## PREPARATION OF EPOXY RESINS

The present invention pertains to the preparation of glycidyl derivatives of aromatic compounds containing an active hydrogen atom reactive with an epihalohydrin.

The preparation of glycidyl ethers by the reaction of an aromatic hydroxyl-containing compound with epihalohydrin in the presence of a base is well known as disclosed by Lee and Neville in HANDBOOK OF EPOXY RESINS, McGraw-Hill, 1967. Because of increased material costs and since in most instances, the reaction is conducted in excess epihalohydrin, any increase in epihalohydrin yields provide for a considerable economy in manufacturing costs. Also, particularly when the epoxy resin is to be employed in electrical applications, it is desirable that the epoxy resin have low hydrolyzable halide and low total ionic halide levels. The present invention provides an efficient process for maximizing epihalohydrin yields and also produces epoxy resins low in hydrolyzable halide and total halide.

The present invention pertains to a process for the preparation of epoxy resins which comprises reacting at least one epihalohydrin with at least one aromatic material containing an active hydrogen atom reactive with an epihalohydrin in the presence of an organic solvent, an alkali metal hydroxide and optionally in the presence of a catalyst for the reaction between the aromatic active hydrogen-containing materials and the epihalohydrin while controlling the concentration of water in the reaction mixture; characterized in that

(1) after completion of the reaction, drying the reaction mixture until the concentration of water is equal to or less than 2 percent by weight;

(2) removing any insoluble materials from the reaction mixture by any suitable mechanical solid separation means thereby forming a resin/epihalohydrin/organic solvent mixture essentially free of insoluble material;

(3) washing the resin/epihalohydrin/organic solvent material with water, so as to remove water soluble materials;

(4) drying the resin/epihalohydrin/organic solvent mixture to a water content equal to or less than 2 percent by weight;

(5) and recovering the resultant epoxy resin from the resin/epihalohydrin/organic solvent mixture by any suitable means.

In the preferred embodiment, the present invention pertains to a process for the preparation of epoxy resins which process includes the steps of

(A) continuously or incrementally adding an aqueous alkali metal hydroxide solution over a period of from 0.5 to 20, suitably from 1 to 10, more suitably from 1 to 6, most suitably from 1.5 to 3, hours to a mixture containing (1) at least one aromatic material containing at least one active hydrogen atom reactive with an epihalohydrin, (2) at least one epihalohydrin and (3) an organic solvent material which codistills with water and epihalohydrin at a temperature below the boiling point of the lowest boiling compound among the components in the reaction mixture at the pressure employed or an organic solvent which has a boiling point above the temperature at which epihalohydrin and water codistil at the temperature and pressure employed;

(B) conducting the reaction under a reduced pressure sufficient to provide a distillate with a boiling point of from 35°C to about 90°C, suitably from 40°C to 85°C, more suitably from 45°C to 75°C, most suitably from 50°C to 70°C, while continuously removing water by means to codistillation with epihalohydrin and solvent at a rate such that the water content in the reaction mixture is less than 6, suitably from 0.3 to 5, more suitably from 0.5 to 4, most suitably from 0.8 to 2 percent by weight; and

(C) separating the water from the distillate and returning the epihalohydrin and organic solvent to the reaction mixture;

(i) the reaction mixture in step (1) is dried until the concentration of water is equal to or less than 2, suitably equal to or less than 1.5, more suitably equal to or less than 1, most suitably equal to or less than 0.2, percent by weight;

(ii) the drying in step (4) is conducted until the water content in the resin/epihalohydrin/organic mixture is equal to or less than 2, suitably equal to or less than 1.5, more suitably equal to or less than 1, most suitably equal to or less than 0.2, percent by weight; and

(iii) the epoxy resin in step (5) is recovered from the resin/epihalohydrin/organic solvent mixture by any suitable means, preferably by distilling the epihalohydrin and organic solvent from the resin.

Hydrolyzable halide is defined herein as any combination of halogen and hydroxyl groups on adjacent carbon atoms. Total halide is defined herein as hydrolyzable halide plus any aliphatic halides not adjacent to a hydroxyl group.

The epihalohydrin can be employed in an amount of at least 1, suitably from 2 to 20, more suitably from 4 to 12, most suitably from 6 to 10, molar excess of epihalohydrin above that required to react stoichiometrically with the active hydrogen-containing material.

The aqueous alkali metal hydroxide solution is employed in a concentration of from 10 to 60, suitably from 20 to 55, more suitably from 30 to 50, most suitably from 40 to 50, percent alkali metal hydroxide by weight.

The reaction is conducted under reduced pressure so as to form a co-distillate of water, epihalohydrin and the organic solvent at the desired reaction temperature.

If the reaction is conducted at temperatures below 35°C, the time required to complete the reaction becomes excessive and it becomes difficult to condense and manage the distillate in a manner conducive to optimum reaction composition.

If the reaction is conducted at temperatures above 90°C, large amounts of insoluble polymers are formed, raw material yields are lowered and processing difficulties occur.

If the reaction is conducted such that the concentration of water in the reactio mixture exceeds 6 percent by weight, hydrolysis of the epihalohydrin becomes dominant and a product very high in hydrolyzable halide is obtained and epihalohydrin yields are decreased.

If the insoluble materials are removed from the resin/epihalohydrin/organic solvent composition containing more than 2% water by weight, the inorganic salt and alkali metal hydroxide do not readily precipitate and the hydrolyzable chloride content of the product would be high due to the reverse reaction of resin, salt and water.

If the insoluble materials are not removed from the resin/epihalohydrin/organic solvent composition prior to water washing and removal of the epihalohydrin and organic solvent, the hydrolyzable halide content of the produce tends to increase, water washing and phase separation is more difficult, distillation equipment tends to become fouled with solid deposits, raw material yields tend to decrease and product quality becomes difficult to control.

The insoluble materials which are removed in the step identified as (E) are usually unreacted alkali metal hydroxide, by-product salts, epihalohydrin polymers and resin polymers.

The insoluble materials can be removed by any suitable mechanical means such as, for example, filtration, centrifugation, combinations thereof and the like.

Suitable compounds which can be employed to react with the epihalohydrin to prepare the corresponding epoxy compounds include, for example, phenols, bisphenols, novolac resins, polyvinyl phenols, the corresponding amine-containing and carboxyl-containing materials. Suitable such materials include but are not limited by those represented by the following formulas:

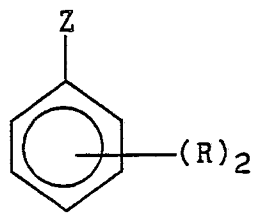

I.

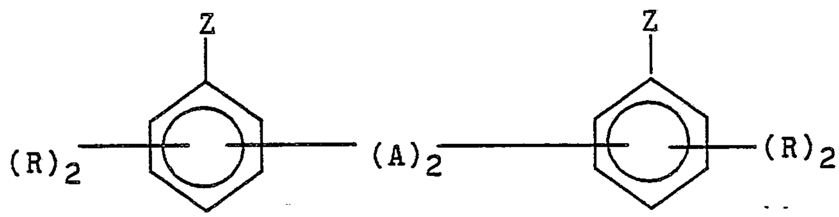

II.

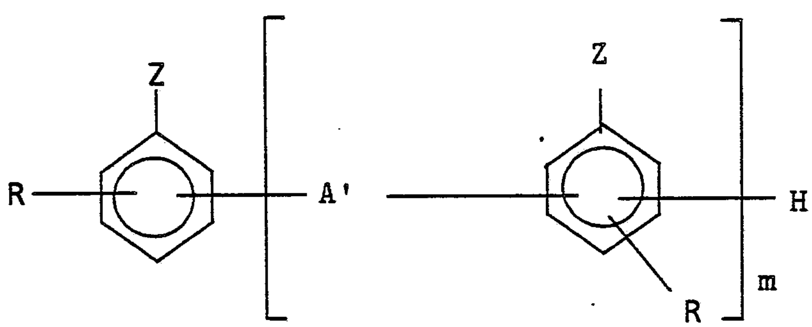

III.

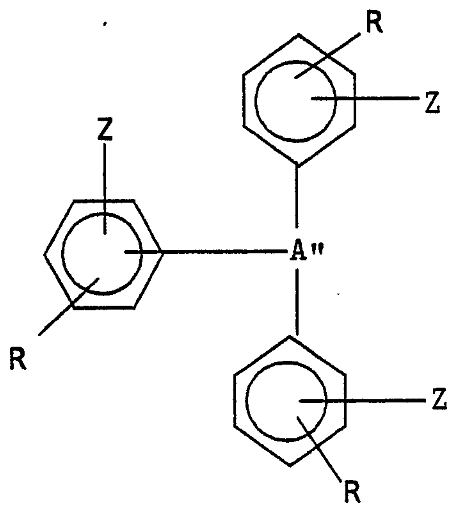

IV.

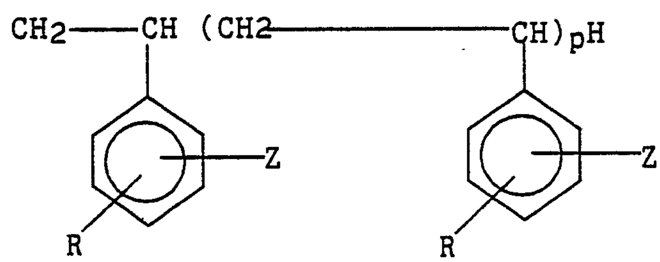

V.

wherein each A is independently a divalent hydrocarbon group having from 1 to 12, preferably from 1 to 6 carbon atoms, -O-, -S-, -S-S-,

$$-\overset{\overset{O}{\|}}{\underset{\underset{O}{\|}}{S}}-, \quad -\overset{\overset{O}{\|}}{S}- \quad \text{or} \quad -\overset{\overset{O}{\|}}{C}-;$$

A′ is a divalent hydrocarbon group having from 1 to 6, preferably from 1 to 4, carbon atoms; A″ is a trivalent hydrocarbon group having from 1 to 12, preferably from 1 to 6, carbon atoms each R is independently hydrogen, a hydrocarbyl group having from 1 to 10, preferably from 1 to 4, carbon atoms, a halogen atom, preferably chlorine or bromine, a hydroxyl group or an amino group; each Z is independently -OH, $-NH_2$ of -COOH; p has a value of from 1 to 100, preferably from 2 to 50; m has a value from 1 to 6.

Also suitable as compounds having at least one aromatic hydroxyl, aromatic amine or carboxyl group per molecule are those represented by the formulas

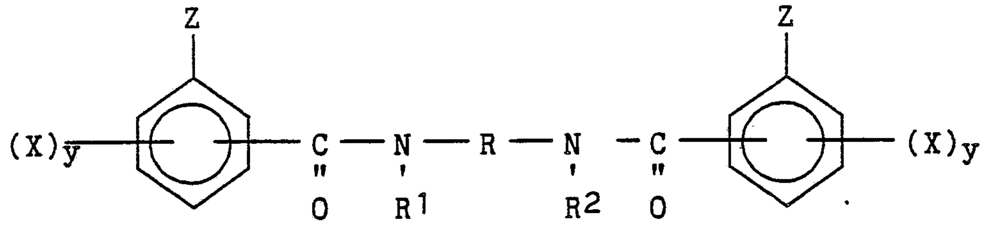

VI.

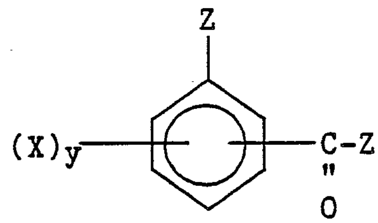

VII.

wherein each R is a divalent hydrocarbyl group having from 1 to 18, preferably from 2 to 12 and most preferably from 2 to 6 carbon atoms, a group represented by the following formulas IX, X, XI OR XII

VIII.

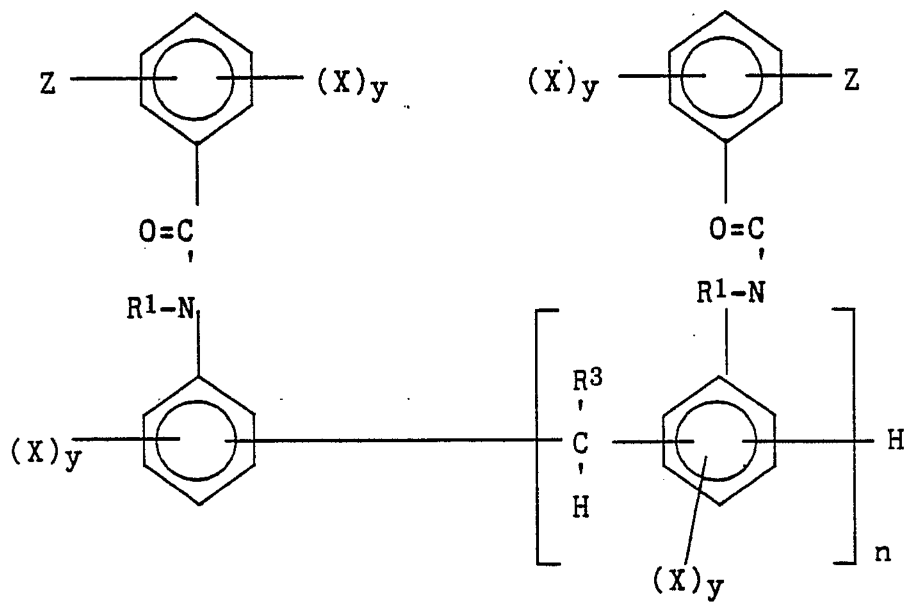

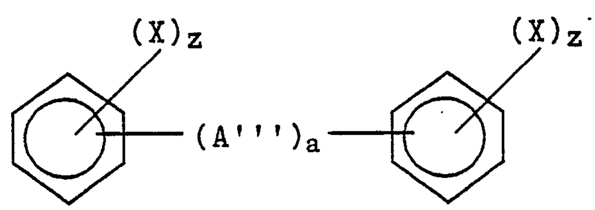

IX.

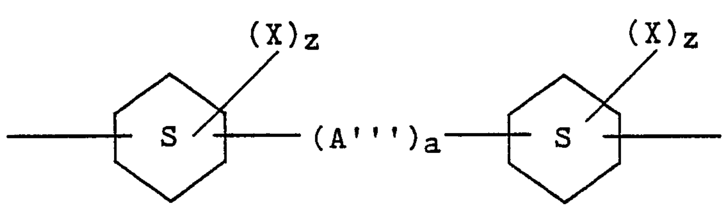

X

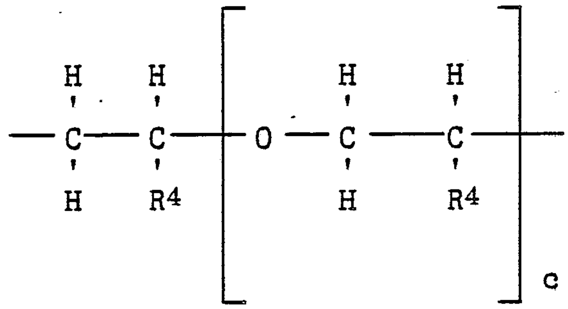

XI.

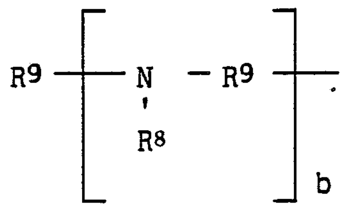

XII

or R can combine with $R^1$ so as to form a stable heterocyclic ring with the nitrogen atoms; each A‴ is independently a divalent hydrocarbyl group having from 1 to 10, preferably from 1 to four carbon atoms, -O-, -s-, -s-s-,

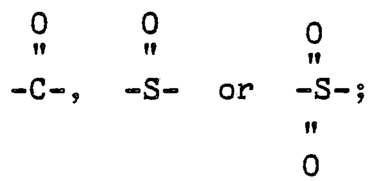

or

each $R^1$ is independently hydrogen, a 2,3-epoxypropyl group, a 2-alkyl-2,3-epoxypropyl group, a monovalent hydrocarbyl group or a hydroxyl substituted monovalent hydrocarbyl group, said hydrocarbyl groups having from 1 to 9 carbon atoms, said alkyl having from 1 to 4, preferably 1 to 3 carbon atoms; each $R^2$ is independently hyrogen or an alkyl group having from 1 to 4, preferably 1 to 3 carbon atoms; each $R^3$ is independently hydrogen or an alkyl group having from 1 to 4 carbon atoms; each $R^4$ is independently hydrogen, a hydrocarbyl or halogen substituted hydrocarbyl group having from 1 to 9, preferably from 1 to 2 carbon atoms; each $R^8$ is the same groups as $R^1$ except that $R^8$ cannot be a hydrogen; each $R^9$ is independently a divalent hydrocarbyl group having from 2 to 4, preferably 2 carbon atoms; each Z is independently -OH, $-NH_2$ or -COOH; each X is independently hydrogen, chlorine, bromine or a hydrocarbyl or a hydrocarbyloxy group having from 1 to 9, preferably 1 to 6 carbon atoms; each a independently has a value of zero or 1; n has an average value of from 0.01 to 6, preferably 0.1 to 4; p has an average value of from 1 to 10, preferably from 1 to 3; c has an average value of at least 1, preferably from 1 to 150, most preferably from 1 to 100 and usually from 1 to 10 and each y and z independently has a value of 1 or 2.

Also suitable are polycyclopentadiene polyphenols or aromatic polyamines represented by the formula

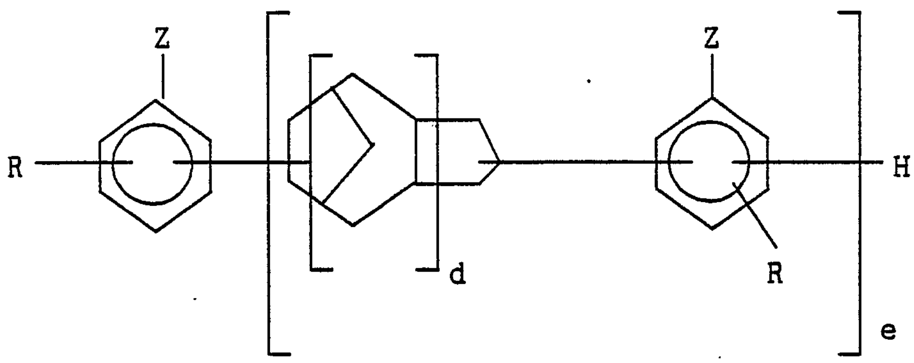

XII I.

wherein Z is -OH, $-NH_2$ or -COOH; d has a value from 1 to 5; e has a value of from 1 to 10, preferably from 3 to 6; each R is independently hydrogen, a hydrocarbyl group having from 1 to 10, preferably from 1 to 4 carbon atoms, a halogen atom, preferably chlorine or bromine, a hydroxyl group or an amino group.

Suitable such polycyclopentadiene polyphenols and methods for their preparation can be found in U.S. Pat. No. 4,390,680 issued to Donald L. Nelson on June 28, 1983. The polycyclopentadiene aromatic polyamines can be prepared in a similar manner by substituting an aromatic amine for the phenolic compound.

Also suitable are compounds containing both at least one aromatic hydroxyl group and at least one aromatic amine group such as, for example, hydroxyl aniline, aminoxylenol and the like.

Suitable epihalohydrins which can be employed herein include those represented by the following formula

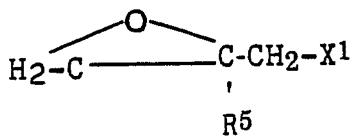

XIV.

wherein $R^5$ is hydrogen or a hydrocarbyl group having from 1 to about 4 carbon atoms and $X^1$ is a halogen, preferably chlorine or bromine.

Particularly suitable epihalohydrins include, for example, epichlorohydrin, epibromohydrin, epiiodohydrin, methylepichlorohydrin, methylepibromohydrin, methylepiiodohydrin, and combinations thereof.

Suitable alkali metal hydroxides which can be employed herein include, for example, sodium hydroxide potassium hydroxide, lithium hydroxide or mixtures thereof. The alkali metal hydroxide is employed as an aqueous solution, usually at a concentration of from 20 to 60, suitably from 20 to 55, more suitably from 30 to 55, most suitably from 40 to 50 percent by weight.

The amount of alkali metal hydroxide which can be employed in the process of the present invention is from 0.80 mole to 1.2 mole of alkali metal hydroxide, preferably from 0.90 mole to 1.0 mole per each aromatic hyroxyl group, aromatic amine hydrogen of -COOH group.

The alkali metal hydroxide can be added either continuously or incrementally, but never is all of the alkali metal hydroxide added in one increment.

Suitable solvents which can be employed herein include any solvent which does not react with any component in the reaction mixture, is partially or wholly miscible with water, forms a codistillate with the epihlaohydrin and water and the distillate has a boiling point below that of the lowest boiling component of the reaction mixture at the pressure employed or an organic solvent which has a boiling point above the boiling point of any codistillate formed by water and epihalohydrin at the reaction temperature and pressure. Suitable such solvents include primary and secondary alcohols such as, for example, 1-methoxy-2-hydroxy propane, 1-butoxy-2-hydroxy ethane, cyclohexanol, and the like. The secondary alcohols are preferred.

The amount of solvent which can be employed will depend on the particular solvent and hydroxyl or amino compound being employed. The solvent generally ranges from 5 to 50 weight percent, suitably from 10 to 40, more suitably from 10 to 30, most suitably from 10 to 25, weight percent based on the total weight of reactants.

The solid materials can be removed from the reaction mixture by any suitable mechanical means such as, for example, filtration, centrifugation or a combination thereof. A particularly suitable mechanical device is a vertical basket centrifuge molde no. PUR-1200W available from Ferrum Ltd., Rupperswill, Switzerland.

The epoxy resin can be recovered from the resin/epihalohydrin/organic solvent mixture by any suitable means, such as for example, distillation. It is preferred to remove the excess epihalohydrin and organic solvent from the epoxy resin by falling film distillation.

The following examples are illustrative of the invention, but are not to be construed as to limiting the scope thereof.

EXAMPLE 1

Into a one liter reaction vessel equipped with temperature and pressure control and indicating means, a means for the continuous or intermittent addition of aqueous sodium hydroxide, a means for condensing and separating water from a codistillate mixture of water, solvent and epichlorohydrin and a means for returning the solvent and epichlorohydrin to the reaction vessel was added 114 grams (1 equiv.) of bisphenol A, 555 grams (6 moles) of epichlorohydrin and 29.2 grams (5 wt. %) bas upon epichlorohydrin) of propylene glycol methyl ether. The contents were stirred at atmospheric pressure to achieve a complete solution. The solution was heated to 65°C under a reduced pressure of 168 mm Hg absolute. To the heated solution was added 80 grams (1 equiv) of a 50% aqueous solution of sodium hydroxide at a constant rate over a period of 2 hours. During this addition of the sodium hydroxide solution, water, epichlorohydrin and propylene glycol methyl ether were codistilled from the reaction mixture and condensed. The condensate formed two distinct phases. The organic (bottom) phase was continuously returned to the reaction mixture while the aqueous (top) phase was removed. The reaction mixture was sampled periodically for water analysis and the pressure adjusted so that the water concentration remained at 1 to 1.5 percent by weight based upon the reaction mixture. After completion of the sodium hydroxide addition, the reaction mixture was digested at 65°C and 168 mm Hg absolute for another 15 minutes. The conversion at this point was 99.95% based upon the phenolic hydroxyl concentration. Drying of the reaction mixture was then accomplished by applying more vacuum to approximately 80 mm Hg absolute. Approximately 10% by volume of the reaction mixture was boiled out to achieve a water concentration of 0.2% by weight in the reaction mixture. The reactio nmixture was then immediately filtered with vacuum suction to remove the insoluble salt and polymer from the resin/epichlorohydrin/propylene glycol methyl ether mixture. The resulting filtrate was a clear solution containing less than 1 ppm (part per million by weight) ionic chloride. Approximately 100 grams of water was added to wash the epihlaohydrin/resin/propylene glycol methyl ether solution in a separatory funnel. The phase separation was rapid and no insoluble polymer was observed. The organic phase was then filtered again and the water removed from the filtrate by flash distillation in a rotary distillation flask. The final stripping conditions to remove the epihalohydrin/solvent were 160°C, less than 10 mm Hg absolute and a 100 $cm^3$/minute (1.67 $cm^3$/s) nitrogen purge for 30 mintues. The resulting epoxy resin had 24 ppm hydrolyzable chloride, 1,113 ppm total chloride, 24.15% epoxide, 8,016 cps (8.016 Pa.s) viscosity at 25°C. Gas chromatography analysis for epihalohydrin hydrolysis product indicated an epihalohydrin yield of 98.4%. Total processing time was 6 hours.

EXAMPLE 2

Into a one liter reaction vessel equipped with temperature and pressure control and indicating means, a means for the continuous or intermittent addition of aqueous sodium hydroxide, a means for condensing and separating water from a codistillate mixture of water, solvent and epichlorohydrin and a means for returning the solvent and epichlorohydrin to the reaction vessel was added 114 grams (1 equiv.) of bisphenol A, 462.6 grams (5 moles) of epichlorohydrin and 51.4 grams (10 wt. % based upon epichlorohydrin) of propylene glycol methyl ether. The contents were stirred at atmospheric pressure to achieve a complete solution. The solution was heated to 65°C under a reduced pressure of 165 mm Hg absolute. To the heated solution was added 79.2 grams (0.99 equiv.) of a 50% aqueous solution of sodium hydroxide at a constant rate over a period of 2.5 hours. During this addition of the sodium hydroxide solution, water, epichlorohydrin and propylene glycol methyl ether were codistilled from the reaction mixture and condensed. The condensate formed two distinct phases. The organic (bottom) phase was continuously returned to the reaction mixture while the aqueous (top) phase was removed. The reaction mixture was sampled periodically for water analysis and the pressure adjusted so that the water concentration remained at 0.9 to

1.0 percent by weight based upon the reaction mixture. After completion of the sodium hydroxide addition, the reaction mixture was digested at 65°C and 170 mm Hg absolute for another 15 minutes. The conversion at this point was 99.90% based upon the phenolic hydroxyl concentration. Drying of the reaction mixture was then accomplished by applying more vacuum to approximately 80 mm Hg absolute.

Approximately 10% by volume of the reaction mixture was boiled out to achieve a water concentration of 0.2% by weight in the reaction mixture. The reaction mixture was then immediately filtered with vacuum suction to remove the insoluble salt and polymer from the resin/epichlorohydrin/propylene glycol methyl ether mixture. The resulting filtrate was a clear solution containing less than 1 ppm (part per million by weight) ionic chloride. Approximately 100 grams of water was added to wash the epihlaohydrin/resin/propylene glycol methyl ether solution in a separatory funnel. The phase separation was rapid and no insoluble polymer was observed. The organic phase was then filtered again and the water removed from the filtrate by flash distillation in a rotary distillation flask. The final stripping conditions to remove the epihalohydrin/solvent were 160°C, less than 10 mm Hg absolute and a 100 $cm^3$/minute (1.67 $cm^3$/s) nitrogen purge for 30 minutes. The resulting epoxy resin had 67 ppm hydrolyzable chloride, 1214 ppm total chloride, 24.12% epoxide, 8409 cps (8.409 Pa.s) viscosity at 25°C. Gas chromatography analysis for epihalohydrin hydrolysis product indicated an epihalohydrin yield of 90.0%. Total processing time was 6 hours.

## EXAMPLE 3

Into a one liter reaction vessel equipped with temperature and pressure control and indicating means, a means for the continuous or intermittent addition of aqueous sodium hydroxide, a means for condensing and separating water from a codistillate mixture of water, solvent and epichlorohydrin and a means for returning the solvent and epichlorohydrin to the reaction vessel was added 114 grams (1 equiv.) of bisphenol A, 462.6 grams (5.0 moles) of epichlorohydrin and 198 grams (30 wt. % based upon epichlorohydrin) of propylene glycol methyl ether. The contents were stirred at atmospheric pressure to achieve a complete solution. The solution was heated to 65°C under a reduced pressure of 180 mm Hg absolute. To the heated solution was added 80 grams (1.00 equiv.) of a 50% aqueous solution of sodium hydroxide at a constant rate over a period of 1.5 hours. During this addition of the sodium hydroxide solution, water, epichlorohydrin and propylene glycol methyl ether were codistilled from the reaction mixture and condensed. The condensate formed two distinct phases. The organic (bottom) phase was continuously returned to the reaction mixture while the aqueous (top) phase was removed. The reaction mixture was sampled periodically for water analysis and the pressure adjusted so that the water concentration remained at 2.0 to 2.5 percent by weight based upon the reaction mixture. After completion of the sodium hydroxide addition, the reaction mixture was digested at 65°C and 165 mm Hg absolute for another 15 minutes. The conversion at this point was 99.99% based upon the phenolic hydroxyl concentration. Drying of the reaction mixture was then accomplished by applying more vacuum to approximately 75 mm Hg absolute. Approximately 15% by volume of the reaction mixture was boiled out to achieve a water concentration of 0.3% by weight in the reaction mixture. The reaction mixture was then immediately filtered with vacuum suction to remove the insoluble salt and polymer from the resin/epichlorohydrin/propylene glycol methyl ether mixture. The resulting filtrate was a clear solution containing 2.5 ppm (part per million by weight) ionic chloride. Approximately 100 grams of water was added to wash the epihalohydrin/resin/propylene glycol methyl ether solution in a separatory funnel. The phase separation was slow and no insoluble polymer was observed. The organic phase was then filtered again and the water removed from the filtrate by flash distillation in a rotary distillation flask. The final stripping conditions to remove the epihalohydrin/solvent were 160°C, less than 10 mm Hg absolute and a 100 $cm^3$/minute (1.67 $cm^3$/s) nitrogen purge for 30 minutes. The resulting epoxy resin had 194 ppm hydrolyzable chloride, 1350 ppm total chloride, 24.10% epoxide, 8337 cps (8.337 Pa.s) viscosity at 25°C. Gas chromatography analysis for epihalohydrin hydrolysis product indicated an epihalohydrin yield of 95.0%. Total processing time was 8 hours.

## EXAMPLE 4

Into a one liter reaction vessel equipped with temperature and pressure control and indicating means, a means for the continuous or intermittent addition of aqueous sodium hydroxide, a means for condensing and separating water from a codistillate mixture of water, solvent and epichlorohydrin and a means for returning the solvent and epichlorohydrin to the reaction vessel was added 114 grams (1 equiv.) of

bisphenol A, 416 grams (4.5 moles) of epichlorohydrin and 46.2 grams (10 wt. % based upon epichlorohydrin) of propylene glycol methyl ether. The contents were stirred at atmospheric pressure to achieve a complete solution. The solution was heated to 65°C under a reduced pressure of 170 mm Hg absolute. To the heated solution was added 78.4 grams (0.98 equiv.) of a 50% aqueous solution of sodium hydroxide at a constant rate over a period of 2.75 hours. During this addition of the sodium hydroxide solution, water, epichlorohydrin and propylene glycol methyl ether were codistilled from the reaction mixture and condensed. The condensate formed two distinct phases. The organic (bottom) phase was continuously returned to the reaction mixture while the aqueous (top) phase was removed. The reaction mixture was sampled periodically for water analysis and the pressure adjusted so that the water concentration remained at 0.7 to 1.0 percent by weight based upon the reaction mixture. After completion of the sodium hydroxide addition, the reaction mixture was digested at 65°C and 168 mm Hg absolute for another 15 mintues. The conversion at this point was 99.89% based upon the phenolic hydroxyl concentration. Drying of the reaction mixture was then accomplished by applying more vacuum to approximately 80 mm Hg absolute. Approximately 10% by volume of the reaction mixture was boiled out to achieve a water concentration of 0.2% by weight in the reaction mixture. The reaction mixture was then immediately filtered with vacuum suction to remove the insoluble salt and polymer from the resin/epichlorohydrin/propylene glycol methyl ether mixture. The resulting filtrate was a clear solution containing less than 1 ppm (part per million by weight) ionic chloride. Approximately 100 grams of water was added to wash the epihalohydrin/resin/propylene glycol methyl ether solution in a separatory funnel. The phase separation was rapid and no insoluble polymer was observed. The organic phase was then filtered again and the water removed from the filtrate by flash distillation in a rotary distillation flask. The final stripping conditions to remove the epihalohydrin/solvent were 100°C, less than 10 mm Hg absolute and a 100 $cm^3$/minute (1.67 $cm^3$/s) nitrogen purge for 30 minutes (1800 s). The resulting epoxy resin had 32 ppm hydrolyzable chloride, 1148 ppm total chloride, 23.97% epoxide, 8611 cps (8.116 Pa.s) viscosity at 25°C. Gas chromatography analysis for epihalohydrin hydrolysis product indicated an epihalohydrin yield of 98.0%. Total processing time was 7 hours.

EXAMPLE 5

Into a one liter reaction vessel equipped with temperature and pressure control and indicating means, a means for the continuous or intermittent addition of aqueous sodium hydroxide, a means for condensing and separating water from a codistillate mixture of water, solvent and epichlorohydrin and a means for returning the solvent and epichlorohydrin to the reaction vessel was added 114 grams (1 equiv.) of bisphenol A, 370 grams (4.0 moles) of epichlorohydrin and 158.6 grams (30 wt. % based upon epichlorohydrin) of propylene glycol methyl ether. The contents were stirred at atmospheric pressure to achieve a complete solution. The solution was heated to 65°C under a reduced pressure of 165 mm Hg absolute. To the heated solution was added 80 grams (1.00 equiv.) of a 50% aqueous solution of sodium hydroxide at a constant rate over a period of 3 hours. During this addition of the sodium hydroxide solution, water, epichlorohydrin and propylene glycol methyl ether were codistilled from the reaction mixture and condensed. The condensate formed two distinct phases. The organic (bottom) phase was continuously returned to the reaction mixture while the aqueous (top) phase was removed. The reaction mixture was sampled periodically for water analysis and the pressure adjusted so that the water concentration remained at 1.0 to 1.5 percent by weight based upon the reaction mixture. After completion of the sodium hydroxide addition, the reaction mixture was digested at 65°C and 165 mm Hg absolute for another 15 minutes. The conversion at this point was 99.99% based upon the phenolic hydroxyl concentration. Drying of the reaction mixture was then accomplished by applying more vacuum to approximately 80 mm Hg absolute. Approximately 20% by volume of the reaction mixture was boiled out to achieve a water concentration of 0.2% by weight in the reaction mixture. The reaction mixture was then immediately filtered with vacuum suction to remove the insoluble salt and polymer from the resin/epichlorohydrin/propylene glycol methyl ether mixture. The resulting filtrate was a clear solution containing 2.0 ppm (part per million by weight) ionic chloride. Approximately 100 grams of water was added to wash the epihalohydrin/resin/propylene glycol methyl ether solution in a separatory funnel. The phase separation was slow and no insoluble polymer was observed. The organic phase was then filtered again and the water removed from the filtrate by flash distillation in a rotary distillation flask. The final stripping conditions to remove the epihalohydrin/solvent were 160°C, less than 10 mm Hg absolute and a 100 $cm^3$/minute (1.67 $cm^3$/s) nitrogen purge for 30 minutes. The resulting epoxy resin had 89 ppm hydrolyzable chloride, 1050 ppm total chloride, 23.80% epoxide, 9800 cps (9.800 Pa.s) viscosity at 25°C. Gas chromatography analysis for epihalohydrin hydrolysis product indicated an epihalohydrin yield of 96%. Total processing time was 9.0 hours.

COMAPRATIVE EXPERIMENT A

The procedure of Example 1 was essentially duplicated except that:

1. No drying of the reaction mixture was carried out at the end of the sodium hydroxide addition.

2. Carbon dioxide was added to neutralize residual sodium hydroxide after the digestion period.

3. Epichlorohydrin was distilled with all of the sodium chloride present which required approximately 2 hours for complete removal of the epichlorohydrin. No filtration was performed after drying and digestion.

4. MIBK (methyl isobutyl ketone) 680 grams, was added to the salt/resin mixture and held at 60°C for 30 minutes with good agitation to dissolve the resin.

5. Two hundred-fifty grams of water was added to the resin/MIBK mixture to wash out the salt in a separatory funnel. The separation was poor with insoluble polymer at the interface and in the aqueous phase. Ionic chloride in the organic phase was 396 ppm. Four additional washes were performed but the ionic chloride concentration after the fifth wash was 11 ppm.

6. Coalescing was needed to reduce ionic chloride of the resin/MIBK solution to less than 1 ppm. The resin/MIBK solution was then distilled in a rotary evaporator to terminal conditions of 160°C, less than 10 mm Hg absolute, 100 $cm^3$/min (1.67 $cm^3$/s) nitrogen purge for 30 minutes.

The resultant epoxy resin was found to contain 426 ppm hydrolyzable chloride, 1621 ppm total chloride, 23.8% epoxide and a viscosity of 7858 cps (71858 Pa.s) at 25°C. Total processing time was 12 hours.

**Claims**

1. A process for the preparation of epoxy resins which comprises reacting at least one epihalohydrin with at least one aromatic material containing an active hydrogen atom reactive with an epihalohydrin in the presence of an organic solvent, an alkali metal hydroxide and optionally in the presence of a catalyst for the reaction between the aromatic active hydrogen-containing material and the epihalohydrin while controlling the concentration of water in the reaction mixture; characterized in that

(1) after completion of the reaction, drying the reaction mixture until the concentration of water is equal to or less than 2 percent by weight;

(2) removing any insoluble materials from the reaction mixture by any suitable mechanical solid separation means thereby forming a resin/epihlaohydrin/organic solvent mixture essentially free of insoluble material;

(3) washing the resin/epihalohydrin/organic solvent material with water, so as to remove water soluble materials;

(4) drying the resin/epihalohydrin/organic solvent mixture to a water content equal to or less than 2 percent by weight;

(5) and recovering the resultant epoxy resin from the resin/epihalohydrin/organic solvent mixture by any suitable means.

2. A process of Claim 1 characterized in that

(i) the reaction mixture in step (1) is dried until the concentration of water is equal to or less than 1.5 percent by weight;

(ii) the drying in step (4) is conducted until the water content in the resin/epihalohydrin/organic solvent mixture is equal to or less than 1.5 percent by weight; and

(iii) the epoxy resin in step (5) is recovered from the resin/epihalohydrin/organic solvent mixture by distilling the epihalohydrin and organic solvent from the resin.

3. A process of Claim 2 characterized in that

(i) the reaction mixture in step (1) is dried until the concentration of water is equal to or less than 1 percent by weight;

(ii) the drying in step (4) is conducted until the water content in the resin/epihalohydrin/organic solvent mixture is equal to or less than 1 percent by weight; and

(iii) the epoxy resin in step (5) is recovered from the resin/epihalohydrin/organic solvent mixture by distilling the epihalohydrin and organic solvent from the resin by means of a rotary evaporator or a falling film still.

4. A process of Claim 3 characterized in that

(i) the reaction mixture in step (1) is dried until the concentration of water is equal to or less than 0.2 percent by weight;

(ii) the insoluble materials are removed in step (2), by filtration or centrifugation or a combination thereof; and

(iiii) the drying in step (4) is conducted until the water content in the resin/epihalohydrin/solvent mixture is equal to or less than 0.2 percent by weight.